# EUROPÄISCHE PATENTSCHRIFT

(11) **EP 2 513 544 B1**
(45) Veröffentlichungstag und Bekanntmachung des Hinweises auf die Patenterteilung: **30.10.2013**
(21) Anmeldenummer: 10784822.8
(22) Anmeldetag: 06.12.2010
(51) Int. Cl.: F16L 11/11, F16L 11/15

(54) **WELLROHR, ROHR UND FRISCHLUFTANLAGE**
CORRUGATED TUBE, TUBE, AND AIR INTAKE SYSTEM
TUBE ONDULÉ, TUBE ET INSTALLATION D'AIR FRAIS

(30) Priorität: 19.12.2009 DE 102009059688
(43) Veröffentlichungstag der Anmeldung: 24.10.2012
(73) Patentinhaber: Mahle International GmbH, 70376 Stuttgart (DE)
(72) Erfinder: SCHIESZL, Andreas, 73479 Ellwangen (DE); WAGNER, Horst, 70327 Stuttgart (DE)
(74) Vertreter: BRP Renaud & Partner
(86) Internationale Anmeldenummer: PCT/EP2010/068922
(87) Internationale Veröffentlichungsnummer: WO 2011/073047

(56) Entgegenhaltungen:
- EP-A1- 0 671 582
- EP-A1- 1 231 424
- DE-A1- 3 151 845
- DE-A1-102008 022 124
- US-A- 5 564 472

## Beschreibung

Die vorliegende Erfindung betrifft ein Wellrohr, insbesondere für eine Frischluftanlage einer Brennkraftmaschine, vorzugsweise eines Kraftfahrzeugs, mit den Merkmalen des Oberbegriffs des Anspruchs 1. Die Erfindung betrifft außerdem ein Rohr, insbesondere einer Frischluftanlage einer Brennkraftmaschine, vorzugsweise eines Kraftfahrzeugs, das mit wenigstens einem als Wellrohr ausgestalteten Rohrabschnitt versehen ist. Des Weiteren betrifft die vorliegende Erfindung eine Frischluftanlage für eine Brennkraftmaschine, insbesondere eines Kraftfahrzeugs, die wenigstens ein Rohr der vorstehenden Art oder zumindest ein Wellrohr der vorstehenden Art aufweist.

Aus der WO 02/02981 A1 ist ein Rohr bekannt, das einen Wellrohrabschnitt bzw. einen als Wellrohr ausgestalteten Abschnitt aufweist. Bei diesem Wellrohr sind mehrere Ringfalten vorgesehen, die in der Rohrlängsrichtung aufeinander folgen. Ein derartiges Wellrohr ist bezüglich seiner Längsmittelachse in allen Richtungen gleichermaßen biegeelastisch. Darüber hinaus geben die Ringfalten dem Wellrohr parallel zur Längsmittelachse, also in Axialrichtung ebenfalls eine gewisse Biegeelastizität, die jedoch für bestimmte Anwendungen, beispielsweise in einer Frischluftanlage einer Brennkraftmaschine, unerwünscht ist, da sie im Falle einer periodischen Druckbeaufschlagung Schwingungen im Rohrkörper anregen kann, was zu einer erhöhten Bauteilbelastung und somit zu einem erhöhten Verschleiß führen kann.

Um die Längsdehnbarkeit des Wellrohrabschnitts zu reduzieren, ist beim bekannten Wellrohrabschnitt vorgesehen, alle Ringfalten über zumindest einen durchgehenden Längssteg miteinander zu verbinden, der hierzu von außen angeordnet ist. Ferner wird beim bekannten Wellrohrabschnitt alternativ vorgeschlagen, die Ringfalten an zwei sich diametral gegenüberliegenden Seiten radial abzuflachen oder mit radialen Einbuchtungen zu versehen oder mit axialen Einschnürungen zu versehen. Dabei sind auf beiden Seiten stets alle Ringfalten mit den Abflachungen, Einbuchtungen bzw. Einschnürungen versehen. Des Weiteren kann beim bekannten Wellrohr vorgesehen sein, die Ringfalten entlang eines vergleichsweise kleinen Umfangsegments mit einer sich in Umfangsrichtung erstreckenden Sicke zu versehen. Bei allen Ausführungsformen sind dabei alle Ringfalten betroffen, und zwar stets an zwei diametral gegenüberliegenden Seiten.

Aus der EP 0 863 351 A2 ist ein Wellrohr bekannt, bei dem keine vollständig umlaufenden Ringfalten, sondern nur halbe Ringfalten vorgesehen sind, so dass diametral gegenüberliegend zwei Mantellinien der Rohrmantelfläche frei von den Wellungen der Falten sind. Hierdurch entstehen an zwei sich diametral gegenüberliegenden Seiten parallel zur Längsmittelachse des Wellrohrs verlaufende geradlinige, faltenfreie Abschnitte. Auch bei dieser Ausführungsform wird die Längselastizität des Wellrohrs signifikant reduziert, während die Biegeelastizität zumindest bezüglich einer Biegeachse erhalten ist.

Aus der DE 31 51 845 A1 ist ein Wellrohr bekannt, das mehrere Ringfalte aufweist, die in Rohrlängsrichtung aufeinanderfolgen. Ferner sind mehrere Längsstege vorgesehen, die sich jeweils in Rohrlängsrichtung erstrecken und dabei jeweils zumindest drei Ringfalten miteinander verbinden. Beim bekannten Wellrohr sind in der Umfangsrichtung benachbarte Längsstege um 120° zueinander versetzt angeordnet. Beim bekannten Wellrohr werden die Längsstege dadurch erzeugt, dass beim Herstellen des Wellrohrs an der Außenseite des Wellrohrs entweder eine durchlaufende Längsnut oder eine Mehrzahl von kleinen Nuten hergestellt wird, welche die Ringfalten mindestens teilweise unterbrechen. In diese Längsnut bzw. in diese kleinen Nuten werden Fasern eingelegt und mit dem Wellrohr verklebt oder verschweißt, um so die Längsstege zu bilden.

Die vorliegende Erfindung beschäftigt sich mit dem Problem, für ein Wellrohr bzw. für ein Rohr bzw. für eine Frischluftanlage eine verbesserte oder zumindest eine andere Ausführungsform anzugeben, die sich insbesondere dadurch auszeichnet, dass sie eine vergleichsweise einfache und relativ genaue Adaption an ein gewünschtes Biegeverhalten ermöglicht.

Dieses Problem wird erfindungsgemäß durch den Gegenstand des unabhängigen Anspruchs gelöst. Vorteilhafte Ausführungsformen sind Gegenstand der abhängigen Ansprüche.

Erfindungsgemäß beruht die vorliegende Erfindung auf dem allgemeinen Gedanken, zumindest einen Längssteg vorzusehen, der sich in der Rohrlängsrichtung erstreckt und dabei zumindest drei Ringfalten miteinander verbindet. Mit Hilfe derartiger Längsstege lässt sich das Biegeverhalten des Wellrohrs gezielt gestalten.

Ferner ist erfindungsgemäß vorgesehen, dass mehrere Längsstege in zumindest einem, sich in der Umfangsrichtung über maximal 90° erstreckenden Umfangsabschnitt des Wellrohrs in der Umfangsrichtung zueinander benachbart sind und in der Rohrlängsrichtung zueinander versetzt angeordnet sind. Des Weiteren sind die Längsstege beim erfindungsgemäßen Wellrohr angespritzt.

Die Längsstege können außen am Wellrohr angeordnet sein und dadurch zumindest eine nach innen orientierte Ringfalte mit den beiden dazu benachbarten, nach außen orientierten Ringfalten verbinden. Besonders vorteilhaft ist eine Ausführungsform, bei welcher der jeweilige Längssteg innen am Wellrohr angeordnet ist und dadurch zumindest eine nach außen orientierte Ringfalte mit den beiden dazu benachbarten, nach innen orientierten Ringfalten verbindet.

Der jeweilige Längssteg ist in der Rohrlängsrichtung vorzugsweise so dimensioniert, dass er nicht alle Ringfalten miteinander verbindet. Bei einer anderen Ausführungsform kann der jeweilige Längssteg genau drei Ringfalten miteinander verbinden, nämlich zwei äußere Ringfalten mit einer inneren Ringfalte oder zwei innere Ringfalten mit einer äußeren Ringfalte, je nachdem, ob sich der Längssteg außen oder innen am Wellrohr befindet.

Durch diese kurzen Längsstege lassen sich lokal begrenzte Aussteifungen innerhalb der Ringfalten realisieren, wodurch die gewünschte Biegeverformbarkeit des Wellrohrs gezielt herbeigeführt werden kann.

Gemäß einer anderen Ausführungsform ist es möglich, mehrere Längsstege, die jeweils mehrere, jedoch nicht alle Ringfalten, vorzugsweise nur drei Ringfalten, miteinander verbinden, in der Rohrlängsrichtung hintereinander anzuordnen und jeweils durch zumindest eine Ringfalte voneinander zu beabstanden. Dabei ist es möglich, diese kurzen Längsstege parallel zur Rohrlängsrichtung hintereinander fluchtend auszurichten.

Gemäß einer besonders vorteilhaften Ausführungsform kann vorgesehen sein, sowohl an der Innenseite als auch an der Außenseite derartige Längsstege auszubilden, wodurch sich quasi ein doppelter Längssteg realisieren lässt, der im Wellrohr wie ein längsorientierter Zuganker wirkt.

Die Längsstege können insbesondere mittels Zwei-Komponenten-Technik an das Wellrohr angespritzt sein, wodurch es insbesondere möglich ist, für die Längsstege einen anderen Kunststoff zu verwenden als für das Wellrohr bzw. dessen Ringfalten. Beispielsweise kann das Wellrohr mit den Ringfalten als Blasformteil hergestellt werden, während die Längsstege dann nachträglich angespritzt werden. Insbesondere kann für die angespritzten Längsstege ein deutlich steiferer Werkstoff verwendet werden.

Bei einer kombinierten Ausführungsform kann das Wellrohr zumindest einen Längssteg der vorbeschriebenen Art sowie wenigstens eine Längsfalte aufweisen, die sich in der Rohrlängsrichtung erstreckt und die dabei zumindest eine Ringfalte durchquert. Auch die jeweilige Längsfalte führt zu einer signifikanten Reduzierung der Biegeelastizität des Wellrohrs in der Längsrichtung, zumindest in dem Bereich, in dem sich die Längsfalte erstreckt. Hierdurch ergeben sich zusätzliche Möglichkeiten zur Modifikation des Biegeverhaltens des Wellrohrs.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch
- Fig. 1: eine Seitenansicht eines Rohrs im Bereich eines als Wellrohr ausgestalteten Abschnitts, bei einer nicht erfindungsgemäßen Ausführungsform,
- Fig. 2: einen Querschnitt II gemäß Fig. 1 des Wellrohrs,
- Fig. 3: ein Querschnitt III gemäß Fig. 1 des Wellrohrs,
- Fig. 4: ein Längsschnitt des Wellrohrs aus Fig. 1,
- Fig. 5: ein Längsschnitt wie in Fig. 4, jedoch bei einer anderen nicht erfindungsgemäßen Ausführungsform,
- Fig. 6: eine Seitenansicht wie in Fig. 1, jedoch bei einer erfindungsgemäßen Ausführungsform,
- Fig. 7: ein Längsschnitt des Rohrs im Bereich von mehreren Ringfalten bei einer anderen erfindungsgemäßen Ausführungsform.

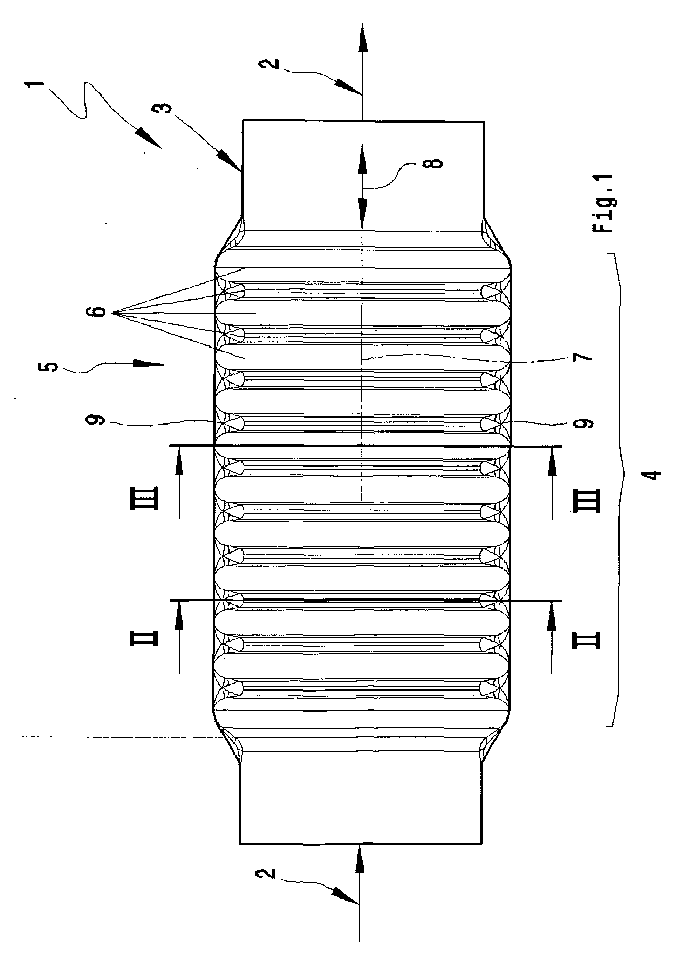

Entsprechend Fig. 1 kann eine im Übrigen nicht dargestellte Frischluftanlage 1, die bei einer Brennkraftmaschine zur Versorgung mit Frischluft verwendet werden kann und insbesondere in einem Kraftfahrzeug angeordnet sein kann, in einem Frischluft führenden Frischluftstrang 2 zumindest ein Rohr 3 enthalten, das bezüglich seiner Längsrichtung einen Rohrabschnitt 4 aufweist, der als Wellrohr 5 ausgestaltet ist. Bei einer anderen Ausführungsform kann das Rohr 3 auch mehrere Rohrabschnitte 4 aufweisen, die jeweils als Wellrohr 5 ausgestaltet sind.

Entsprechend den Fig. 1-7 charakterisiert sich ein derartiges Wellrohr 5 durch mehrere Ringfalten 6, die sich jeweils koaxial zu einer Längsmittelachse 7 des Wellrohrs 5 erstrecken und in einer durch die Längsmittelachse 7 definierten Rohrlängsrichtung 8 aufeinanderfolgen. Die einzelnen Ringfalten 6 sind dabei mit runden Querschnittsprofilen ausgeführt, wodurch in der Längsrichtung 7 eine Wellenstruktur entsteht. Grundsätzlich sind jedoch auch kantige Ringfalten 6 denkbar, wobei dann in der Längsrichtung 7 eine zick-zack-förmige Struktur entsteht.

Bei den hier gezeigten Beispielen ist das Wellrohr 5 geradlinig ausgeführt. Grundsätzlich ist jedoch auch eine gekrümmte Form denkbar.

Das Wellrohr 5 bzw. das Rohr 3 besteht zweckmäßig aus einem Kunststoff, vorzugsweise aus einem thermoplastischen Kunststoff. Der Kunststoff kann dabei mit oder ohne Füllstoffe sein. Er kann faserverstärkt sein.

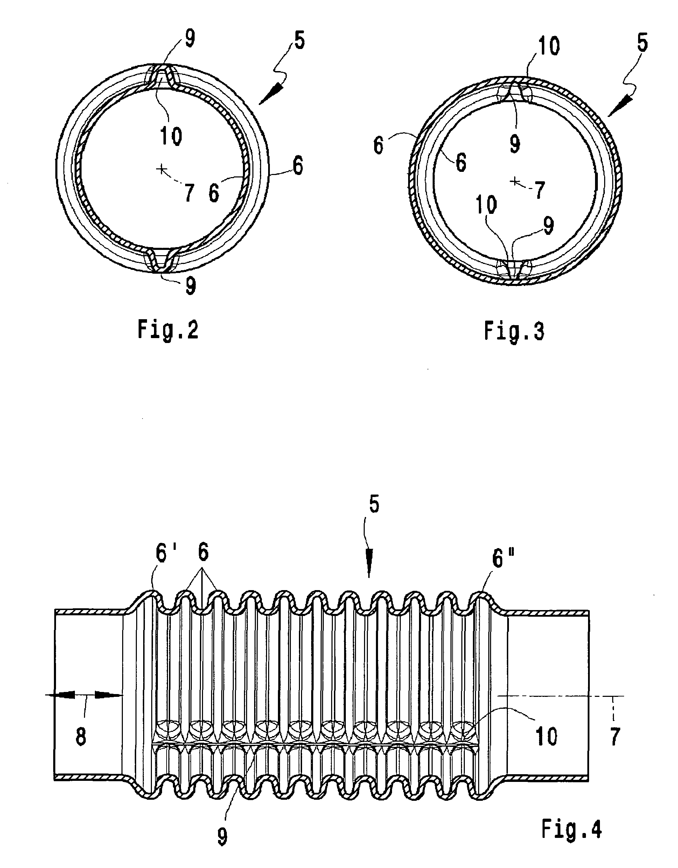

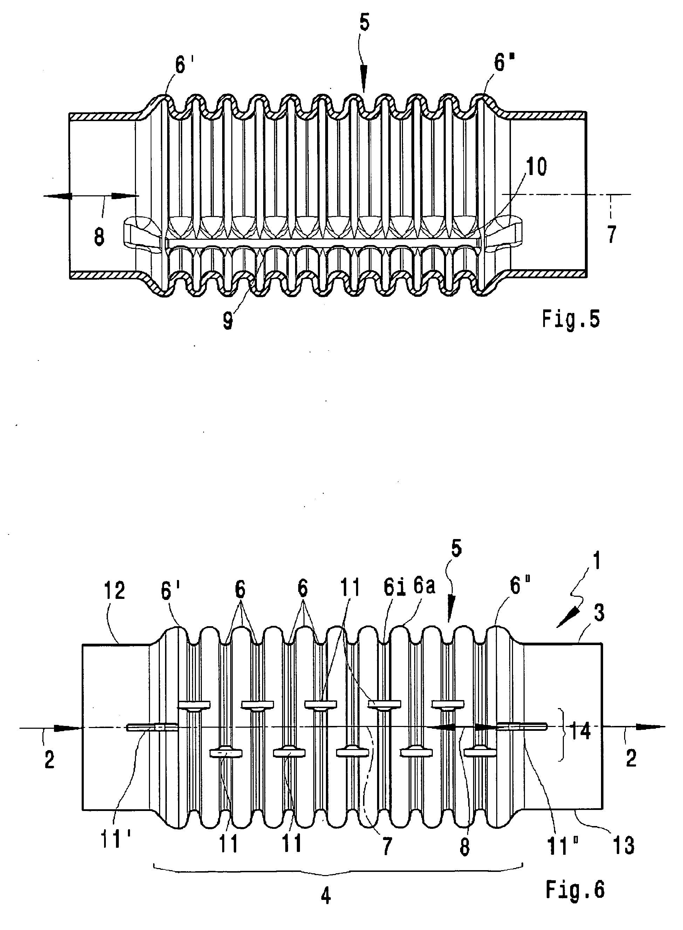

Entsprechend den Figuren 1-5 weist das Wellrohr 5 zumindest eine Längsfalte 9 auf, die sich in der Rohrlängsrichtung 8 erstreckt und die zumindest eine Ringfalte 6 durchquert. Bei den hier gezeigten Ausführungsformen sind jeweils zwei derartige Längsfalten 9 vorgesehen, die in der Umfangsrichtung des Wellrohrs 5 um 180° zueinander versetzt angeordnet sind, so dass sie sich diametral gegenüberliegen. Des Weiteren erstrecken sich die Längsfalten 9 bei den hier gezeigten Ausführungsformen durch alle Ringfalten 6 (Fig. 5) oder durch beinahe alle Ringfalten 6 (Fig. 4) hindurch.

Bei den hier gezeigten Ausführungsformen ist die jeweilige Längsfalte 9 so ausgestaltet, dass sie in der Radialrichtung von innen nach außen gefaltet ist. In der Folge bildet die jeweilige Längsfalte 9 innerhalb der jeweiligen von der Längsfalte 9 durchquerten Ringfalte 6 im Bereich der Längsfalte 9 eine Unterbrechung 10 der jeweiligen durchquerten Ringfalte 6 in der Umfangsrichtung des Wellrohrs 5. Die jeweilige Unterbrechung 10 befindet sich dann innen, also an der Innenseite des Wellrohrs 5.

Alternativ ist es ebenso möglich, zumindest eine dieser Längsfalten 9 so auszugestalten, dass sie radial von außen nach innen gefaltet ist. In der Folge ist dann die jeweilige von der Längsfalte 9 durchquerte Ringfalte 6 im Bereich der jeweiligen Längsfalte 9 außen unterbrochen. In den Beispielen der Fig. 1-5 ist die jeweilige Längsfalte 9 in der Rohrlängsrichtung 8 vergleichsweise lang. Bei der in Fig. 4 gezeigten Ausführungsform ist die jeweilige Längsfalte 9 so lang, dass sie sowohl in die erste Ringfalte 6' als auch in die letzte Ringfalte 6" eindringt, jedoch ohne sie zu durchqueren. Im Unterschied dazu zeigen die Figuren 1 und 5 eine Ausführungsform, bei der die lange Längsfalte 9 so groß dimensioniert ist, dass sie auch die erste Ringfalte 6' und die letzte Ringfalte 6" durchquert.

Gemäß den Fig. 1-3 kann die jeweilige Längsfalte 9 gezielt so geformt werden, dass sie in radialer Richtung die gleichen Abmessungen besitzt wie die Ringfalten 6. Insbesondere besitzt die jeweilige Längsfalte 9 etwa das gleiche Querschnittsprofil wie die Ringfalte 6. Bei der hier gezeigten Ausführungsform besitzt die jeweilige Längsfalte 9 quer zur Rohrlängsrichtung 8 ein V-förmiges Profil. Da bei dieser Ausführungsform die Längsfalte 9 von innen nach außen orientiert ist, ist ihr V-Profil auch nach innen geöffnet. Bei einer von außen nach innen orientierten Längsfalte 9 wäre dann das V-Profil nach außen geöffnet.

Die jeweilige Längsfalte 9 schließt hier radial außen bündig mit den Ringfalten 6 ab.

Alternativ zu den weiter oben beschriebenen und in den Fig. 1 bis 5 gezeigten langen Längsfalten 9 lassen sich - insbesondere analog zu der Darstellung gemäß Fig. 6 - auch kurze Längsfalten 9 realisieren, die sich in der Rohrlängsrichtung 8 nur soweit erstrecken, dass sie jedenfalls nicht alle Ringfalten 6 durchqueren, sondern nur wenige, insbesondere maximal die Hälfte der Ringfalten 6, durchqueren. Im Extremfall sind auch Längsfalten 9 vorstellbar, die nur eine einzige Ringfalte 6 durchqueren und in die beiden dazu benachbarten Ringfalten eindringen.

Bei derartigen kurzen Längsfalten 9 kann es vorgesehen sein, diese in der Rohrlängsrichtung 8 hintereinander anzuordnen. Dabei ist es möglich, diese kurzen Längsfalten 9 in der Rohrlängsrichtung 8 zueinander fluchtend, also geradlinig in einer Linie hintereinander anzuordnen, wobei dann zwischen aufeinanderfolgenden Längsfalten 9 ein Abstand von mindestens einer Ringfalte 6 freigehalten ist, wodurch eine gewisse Elastizität für das Wellrohr 5 in der Längsrichtung 8 realisierbar ist. Des Weiteren ist es möglich, die hintereinander angeordneten Längsfalten 9 in der Umfangsrichtung zueinander versetzt anzuordnen. Beispielsweise können zumindest zwei Reihen hintereinander angeordneter Längsfalten 9 vorgesehen sein, wobei die aufeinanderfolgenden Längsfalten 9 abwechselnd in der einen Reihe und in der anderen Reihe angeordnet sind. Durch den Abstand in Umfangsrichtung kann die Elastizität des Wellrohrs 5 in der Längsrichtung 8 eingestellt werden. Ebenso lässt sich die Biegesteifigkeit des Wellrohrs 5 durch die Anordnung der Längsfalten 9 entlang des Wellrohrs 5 und in Umfangsrichtung des Wellrohrs 5 gezielt beeinflussen. Insbesondere kann eine richtungsabhängige Biegesteifigkeit eingestellt werden.

Sofern die kurzen Längsfalten 9 in der Rohrlängsrichtung 8 hintereinander und in der Umfangsrichtung zueinander versetzt sind, kann es zwischen Längsfalten 9, die in der Umfangsrichtung benachbart sind, auch zu Überlappungen in der Rohrlängsrichtung 8 kommen.

Die jeweilige Längsfalte 9 kann integral am Wellrohr 5 ausgeformt sein. Beispielsweise lässt sich die jeweilige Längsfalte 9 beim Blasformen des Wellrohrs 5 bzw. des Rohrs 3 durch eine entsprechende Formgebung des Blasformwerkzeugs integral ausbilden.

Grundsätzlich kann die jeweilige Längsfalte 9 auch nachträglich am Wellrohr 5 angebracht werden, beispielsweise durch einen entsprechenden Umformvorgang, wie zum Beispiel Heißpressen.

Fig. 6 zeigt eine andere Ausführungsform des Wellrohrs 5 und somit des Rohrs 3 und außerdem der Frischluftanlage 1. Das Wellrohr 5 ist hier nicht mit zumindest einer Längsfalte 9, sondern zumindest mit einem Längssteg 11 ausgestattet, der sich analog zur jeweiligen Längsfalte 9 in der Rohrlängsrichtung 8 erstreckt und dabei zumindest drei Ringfalten 6 miteinander verbindet. Gezeigt ist dabei in Fig. 6 eine Ausführungsform, bei welcher mehrere Längsstege 11 vorgesehen sind, die jeweils nur drei Ringfalten 6 miteinander verbinden, jedenfalls nicht alle Ringfalten 6. Bei der in Fig. 6 gezeigten Ausführungsform sind die Längsstege 11 außen am Wellrohr 5 angeordnet. Bei dieser außenliegenden Anordnung verbindet der jeweilige Längssteg 11 zumindest eine nach innen orientierte Ringfalte 6i mit den beiden dazu benachbarten, nach außen orientierten Ringfalten 6a. Bei einer anderen Ausführungsform kann es auch vorgesehen sein, die Längsstege 11 innen am Wellrohr 5 anzuordnen. Bei einer derartigen innenliegenden Anordnung der Längsstege 11 verbindet der jeweilige Längssteg 11 dann zumindest eine nach außen orientierte Ringfalte 6a mit den beiden dazu benachbarten, nach innen orientierten Ringfalten 6i.

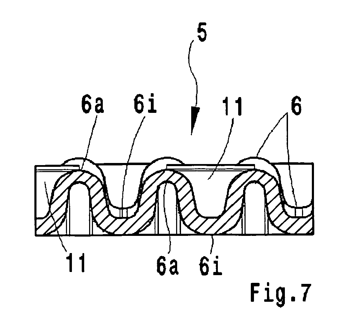

Fig. 7 zeigt exemplarisch einen Längsschnitt durch ein Wellrohr 5 in einem Wandabschnitt, bei dem sowohl ein außenliegender Längssteg 11 als auch ein innenliegender Längssteg 11 vorgesehen ist. Dabei erstrecken sich diese Längsstege 11 jeweils über mehrere Ringfalten 6. Bei dieser Ausführungsform können sie sich auch über alle Ringstege 6 erstrecken. Zweckmäßig sind die Längsstege 11 radial fluchtend zueinander positioniert, wodurch sich im Wellrohr 5 durch die Längsstege 11 ein sich in der Rohrlängsrichtung 8 durch die Wandung des Wellrohrs 5 hindurch erstreckendes Zugband ausbildet, das eine relativ starke Aussteifung des Wellrohrs 5 in der Längsrichtung 8 bewirkt.

Bei der in Fig. 6 gezeigten Ausführungsform verbindet der jeweilige Längssteg 11 genau drei Ringfalten 6 miteinander, nämlich aufgrund der außenliegenden Anordnung jeweils zwei außenliegende Ringfalten 6a und eine innenliegende Ringfalte 6i. Zusätzlich zeigt Fig. 6 einen ersten Zusatzsteg 11', der die erste Ringfalte 6' mit einem an den Wellrohrabschnitt 4 anschließenden ungewellten Rohrabschnitt 12 verbindet, sowie einen zweiten Zusatzsteg 11 ", der die letzte Ringfalte 6" mit einem an den Wellrohrabschnitt 4 anschließenden ungewellten Rohrabschnitt 13 verbindet.

Bei einer anderen Ausführungsform können auch längere Längsstege 11 verwirklicht werden, die sich über mehr als drei Ringfalten 6 erstrecken. Insbesondere kann ein solcher Längssteg 11 - analog zur Ausführungsform gemäß Fig. 4 - an der ersten Ringfalte 6' beginnen, während ein anderer Längssteg 11 an der letzten Ringfalte 6" endet. Ebenso ist es möglich, zumindest einen Längssteg 11 so auszugestalten, dass er sich - analog zu Fig. 5 - über die erste Ringfalte 6' oder über die letzte Ringfalte 6" hinauserstreckt. Der jeweilige Längssteg 11 beinhaltet dann die Funktionalität des jeweiligen Zusatzstegs 11' bzw. 11 ".

Bei der in Fig. 6 gezeigten Konfiguration sind zwei Reihen geradlinig und parallel zur Längsmittelachse 7 hintereinander angeordneter Längsstege 11 vorgesehen, wobei innerhalb der jeweiligen Reihe die aufeinanderfolgenden Längsstege 11 jeweils um mindestens eine Ringfalte 6 voneinander beabstandet sind. Im Beispiel ist je eine innere Ringfalte 6i zwischen den aufeinanderfolgenden Längsstegen 11 angeordnet.

Ferner zeigt Fig. 6 eine Konfiguration, bei welcher die in der Rohrlängsrichtung 8 aufeinanderfolgenden Längsstege 11 in der Umfangsrichtung des Wellrohrs 5 zueinander versetzt angeordnet sind. Im Beispiel sind sie abwechselnd in der einen Reihe oder in der anderen Reihe angeordnet. In diesem Fall entspricht dies auch einer Konfiguration, bei welcher mehrere Längsstege 11 in der Umfangsrichtung zueinander benachbart und in der Rohrlängsrichtung 8 zueinander versetzt angeordnet sind.

Die Zusatzstege 11', 11" sind dabei vorzugsweise in Umfangsrichtung mittig zwischen den beiden Reihen der Längsstege 11 angeordnet.

Die Längsstege 11 sind bei der in Fig. 6 gezeigten Ausführungsform in einem Umfangsabschnitt 14 angeordnet, der sich in der Umfangsrichtung des Wellrohrs 5 maximal über 90°, vorzugsweise jedoch über maximal 60° oder maximal 45° oder maximal 30° erstreckt. Hierdurch wird ein definierter Umfangsabschnitt 14 ausgesteift, um gezielt das Biegeverhalten und insbesondere das Längsdehnungsverhalten des Wellrohrs 5 zu gestalten. Diametral gegenüber des in Fig. 6 erkennbaren, dem Betrachter zugewandten Umfangsabschnitts 14 kann ein weiterer vom Betrachter abgewandter Umfangsabschnitt 14 vorgesehen sein, in dem ebenfalls zumindest ein Längssteg 11 angeordnet ist. Für ein symmetrisches Biegeverhalten sind die beiden Umfangsabschnitte 14 identisch oder spiegelverkehrt gestaltet. Zur Realisierung eines asymmetrischen Biegeverhaltens für das Wellrohr 5 können die diametral gegenüberliegenden Umfangsabschnitte 14 hinsichtlich der Größe und Positionierung der Längsstege 11 auch verschieden ausgestaltet sein.

Bei den hier gezeigten Ausführungsformen sind die Längsstege 11 in der Radialrichtung so dimensioniert, dass sie außen nicht in radialer Richtung über die nach außen orientierten Ringfalten 6a vorstehen. Dies gilt für die außen angeordneten Längsstege 11. Innen im Wellrohr 5 angeordnete Längsstege 11 können so dimensioniert sein, dass sie in der Radialrichtung nach innen nicht über die nach innen orientierten Ringfalten 6i vorstehen. Quer zur Rohrlängsrichtung 8 können die Längsstege 11 ein Rechteckprofil aufweisen.

Die Längsstege 11 lassen sich ebenso wie die jeweilige Längsfalte 9 am Wellrohr 5 integral ausformen. Die Längsstege 11 sind dabei bevorzugt an das Wellrohr 5 angespritzt. Ebenso ist es möglich, die Längsstege 11 separat vom Wellrohr 5 herzustellen, um sie dann an das Wellrohr 5 anzubauen. Beispielsweise können sie an das Wellrohr 5 angeklebt oder angeschweißt werden. Sofern die Längsstege 11 an das Wellrohr 5 angespritzt werden, lässt sich für die Längsstege 11 grundsätzlich ein anderer Werkstoff verwenden als für das Wellrohr 5. Hierdurch ist es insbesondere möglich, die Längsstege 11 durch eine entsprechende Materialauswahl mit einer besonders hohen Biegesteifigkeit bzw. Zugfestigkeit auszustatten.

Alternativ lassen sich die Längsstege 11 auch nach Art einer Kleberaupe aufbringen, also ohne Spritzgusswerkzeug frei anspritzen.

Sofern wie im Beispiel der Fig. 6 zumindest zwei Längsstege 11 vorhanden sind, die in der Umfangsrichtung des Wellrohrs 5 zueinander versetzt angeordnet sind, ist es einerseits möglich, die Längsstege 11 bezüglich ihrer radialen Erstreckung exakt radial zur Längsmittelachse 7 auszurichten. Andererseits wird jedoch eine Ausführungsform bevorzugt, bei der sich die Längsstege 11 alle parallel zu einer Ebene erstrecken, welche die Längsmittelachse 7 enthält. Hierdurch ist es möglich, für die Herstellung der Längsstege 11 ein zweiteiliges Formwerkzeug zu verwenden, dessen Öffnungsrichtung in besagter Ebene liegt und dabei senkrecht auf der Längsmittelachse 7 steht.

Obwohl die hier vorgestellten Ausführungsformen des Wellrohrs 5 entweder nur mit wenigstens einer Längsfalte 9 oder nur mit wenigstens einem Längssteg 11 ausgestattet sind, kann es bei einer anderen Ausführungsform vorgesehen sein, das Wellrohr 5 sowohl mit wenigstens einer Längsfalte 9 als auch mit wenigstens einem Längssteg 11 auszustatten. Hierdurch ergeben sich noch größere Möglichkeiten zur gezielten Gestaltung der dreidimensionalen Beweglichkeit des Wellrohrs 5.

## Patentansprüche

1. Wellrohr, insbesondere für eine Frischluftanlage (1) einer Brennkraftmaschine, vorzugsweise eines Kraftfahrzeugs,
- mit mehreren Ringfalten (6), die in Rohrlängsrichtung (8) aufeinanderfolgen,
- mit mindestens einem Längssteg (11), der sich in Rohrlängsrichtung (8) erstreckt und dabei zumindest drei Ringfalten (6) miteinander verbindet,
**dadurch gekennzeichnet,**
- **dass** mehrere Längsstege (11) in zumindest einem, sich in der Umfangsrichtung über maximal 90° erstreckenden Umfangsabschnitt (14) des Wellrohrs (5) in der Umfangsrichtung zueinander benachbart sind und in der Rohrlängsrichtung (8) zueinander versetzt angeordnet sind,
- **dass** der jeweilige Längssteg (11) an das Wellrohr (5) angespritzt ist.

2. Wellrohr nach Anspruch 1,
**dadurch gekennzeichnet,**
**dass** der jeweilige Längssteg (11) mittels Zwei-Komponenten-Technik an das Wellrohr (5) angespritzt ist.

3. Wellrohr nach Anspruch 1 oder 2,
**dadurch gekennzeichnet,**
**dass** das Wellrohr (5) ein Blasformteil ist, an das der jeweilige Längssteg (11) angespritzt ist.

4. Wellrohr nach einem der Ansprüche 1 bis 3,
**dadurch gekennzeichnet,**
**dass** der jeweilige Längssteg (11) aus einem anderen Kunststoff besteht als das Wellrohr (5).

5. Wellrohr nach einem der Ansprüche 1 bis 4,
**dadurch gekennzeichnet,**
**dass** sich der Umfangsabschnitt (14) in der Umfangsrichtung über maximal 30° erstreckt.

6. Wellrohr nach einem der Ansprüche 1 bis 5,
**dadurch gekennzeichnet,**
**dass** zwei derartige Umfangsabschnitte (14) mit Längsstegen (11) vorgesehen sind, die zueinander diametral angeordnet sind.

7. Wellrohr nach einem der Ansprüche 1 bis 6,
**dadurch gekennzeichnet,**
- **dass** zumindest ein solcher Längssteg (11) außen am Wellrohr (5) angeordnet ist und dadurch zumindest eine nach innen orientierte Ringfalte (6i) mit den beiden dazu benachbarten, nach außen orientierten Ringfalten (6a) verbindet, und/oder
- **dass** zumindest ein solcher Längssteg (11) innen am Wellrohr (5) angeordnet ist und dadurch zumindest eine nach außen orientierte Ringfalte (6a) mit den beiden dazu benachbarten, nach innen orientierten Ringfalten (6i) verbindet,
- wobei insbesondere vorgesehen sein kann, dass zumindest ein außen am Wellrohr angeordneter Längssteg (11) und zumindest ein innen am Wellrohr (5) angeordneter Längssteg (11) vorgesehen sind, die insbesondere in radialer Richtung fluchtend zueinander angeordnet sein können.

8. Wellrohr nach einem der Ansprüche 1 bis 7,
**dadurch gekennzeichnet,**
- **dass** zumindest ein solcher Längssteg (11) genau drei Ringfalten (6) miteinander verbindet, und/oder
- **dass** sich zumindest ein solcher Längssteg (11) in der Rohrlängsrichtung (8) soweit erstreckt, dass er an der ersten Ringfalte (6') beginnt oder an der letzten Ringfalte (6") endet, und/oder
- **dass** sich zumindest ein solcher Längssteg (11) in der Rohrlängsrichtung (8) soweit erstreckt, dass er sich über die erste Ringfalte (6') oder über die letzte Ringfalte (6") hinaus erstreckt.

9. Wellrohr nach einem der Ansprüche 1 bis 8,
**dadurch gekennzeichnet,**
- **dass** mehrere Längsstege (11), die jeweils mehrere, jedoch nicht alle Ringfalten (6), insbesondere nur drei Ringfalten (6), miteinander verbinden, in der Rohrlängsrichtung (8) hintereinander angeordnet sind und jeweils durch wenigstens eine Ringfalte (6) voneinander beabstandet sind, und/oder
- **dass** mehrere Längsstege (11) in der Rohrlängsrichtung (8) aufeinanderfolgen und in der Umfangsrichtung zueinander versetzt angeordnet sind.

10. Wellrohr nach einem der Ansprüche 1 bis 9,
**dadurch gekennzeichnet,**
- **dass** zumindest ein solcher Längssteg (11) radial so dimensioniert ist, dass er außen nicht radial über die nach außen orientierten Ringfalten (6) vorsteht oder innen nicht radial über die nach innen orientierten Ringfalten (6i) vorsteht, und/oder
- **dass** zumindest ein solcher Längssteg (11) quer zur Rohrlängsrichtung (8) ein Rechteckprofil aufweist.

11. Wellrohr nach einem der Ansprüche 1 bis 10,
**dadurch gekennzeichnet,**
**dass** wenigstens eine Längsfalte (9) vorgesehen ist, die sich in Rohrlängsrichtung (8) erstreckt und dabei zumindest eine Ringfalte (6) durchquert.

12. Rohr, insbesondere einer Frischluftanlage (1) einer Brennkraftmaschine, vorzugsweise eines Kraftfahrzeugs, mit mindestens einem Rohrabschnitt (4), der als Wellrohr (5) nach einem der Ansprüche 1 bis 11 ausgestaltet ist.

13. Frischluftanlage für eine Brennkraftmaschine, insbesondere eines Kraftfahrzeugs, mit mindestens einem Rohr (3) nach Anspruch 12 oder mit mindestens einem Wellrohr (5) nach einem der Ansprüche 1 bis 11.

## Claims

1. A corrugated tube, in particular for an air intake system (1) of an internal combustion engine, preferably of a motor vehicle,
- with a plurality of annular pleats (6) arranged successively in the longitudinal direction (8),
- with at least one longitudinal web (11) that extends in the longitudinal direction (8) of the tube and thereby connects at least three annular pleats (6) to each other,
**characterized in**
- **that** a plurality of longitudinal webs (11) are adjacent to each other in the circumferential direction in at least one circumferential section (14) of the corrugated tube (5), which circumferential section extends in the circumferential direction over a maximum of 90°, and are arranged offset to each other in the longitudinal direction (8) of the tube,
- **that** the respective longitudinal web (11) is injection moulded onto the corrugated tube (5).

2. The corrugated tube according to claim 1,
**characterized in**
**that** the respective longitudinal web (11) is injection moulded onto the corrugated tube (5) by means of two-component technology.

3. The corrugated tube according to claim 1 or claim 2,
**characterized in**
**that** the corrugated tube (5) is a blow moulded part onto which the respective longitudinal web (11) is injection moulded.

4. The corrugated tube according to any one of the claims 1 to 3,
**characterized in**
**that** the respective longitudinal web (11) consists of a plastic material that differs from that of the corrugated tube (5).

5. The corrugated tube according to any one of the claims 1 to 4,
**characterized in**
**that** the circumferential section (14) extends in the circumferential direction over a maximum of 30°.

6. The corrugated tube according to any one of the claims 1 to 5,
**characterized in**
**that** two such circumferential sections (14) are provided with longitudinal webs (11) that are arranged diametrical to each other.

7. The corrugated tube according to any one of the claims 1 to 6,
**characterized in**
- **that** at least one such longitudinal web (11) is arranged on the outside of the corrugated tube (5) and thereby connects at least one inwardly oriented annular pleat (6i) to the two annular pleats (6a) that are adjacent thereto and are oriented outwardly, and/or
- **that** at least one such longitudinal web (11) is arranged on the inside of the corrugated tube (5) and thereby connects at least one outwardly oriented annular pleat (6a) to the two annular pleats (6i) that are adjacent thereto and are oriented inwardly,
- wherein it can in particular be provided that at least one longitudinal web (11) arranged on the outside of the corrugated tube and at least one longitudinal web (11) arranged on the inside of the corrugated tube (5) are provided, which can in particular be arranged aligned with each other in the radial direction.

8. The corrugated tube according to any one of the claims 1 to 7,
**characterized in**
- **that** at least one such longitudinal web (11) connects exactly three annular pleats (6) to each other, and/or
- **that** at least one such longitudinal web (11) extends in the longitudinal direction (8) of the tube so far that it begins at the first annular pleat (6') or ends at the last annular pleat (6"), and/or
- **that** at least one such longitudinal web (11) extends in the longitudinal direction (8) so far that it extends beyond the first annular pleat (6') or beyond the last annular pleat (6").

9. The corrugated tube according to any one of the claims 1 to 8,
**characterized in**
- **that** a plurality of longitudinal webs (11), each of which connects a plurality of annular pleats (6), but not all of them, in particular only three annular pleats (6), to each other, are arranged one behind the other in the longitudinal direction (8) of the tube and are each spaced apart from each other by at least one annular pleat (6), and/or
- **that** a plurality of longitudinal webs (11) are arranged one behind the other in the longitudinal direction (8) and are arranged offset to each other in the circumferential direction.

10. The corrugated tube according to any one of the claims 1 to 9,
**characterized in**
- **that** at least one such longitudinal web (11) is radially dimensioned in such a manner that it does not radially protrude on the outside beyond the outwardly oriented annular pleats (6), or does not protrude on the inside beyond the radially inwardly oriented annular pleats (6i), and/or
- **that** at least one such longitudinal web (11) has a rectangular profile transverse to the longitudinal direction (8).

11. The corrugated tube according to any one of the claims 1 to 10,
**characterized in**
**that** at least one longitudinal pleat (9) is provided that extends in the longitudinal direction (8) of the tube and thereby passes through at least one annular pleat (6).

12. A tube, in particular of an air intake system (1) of an internal combustion engine, preferably of a motor vehicle, comprising at least one tube section (4) that is configured as a corrugated tube (5) according to any one of the claims 1 to 11.

13. An air intake system for an internal combustion engine, in particular of a motor vehicle, comprising at least one tube (3) according to claim 12 or at least one corrugated tube (5) according to any one of the claims 1 to 11.

## Revendications

1. Tube ondulé, notamment pour une installation d'air frais (1) d'un moteur à combustion interne, de préférence d'un véhicule automobile,
- comportant plusieurs plissures annulaires (6), qui se succèdent dans la direction longitudinale du tube (8),
- comportant au moins un gradin longitudinal (11), qui s'étend dans la direction longitudinale du tube (8) et relie ainsi au moins trois plissures annulaires (6) les unes aux autres,
**caractérisé en ce que**
- plusieurs gradins longitudinaux (11) sont voisins les uns des autres dans la direction circonférentielle dans au moins une portion longitudinale (14) du tube ondulé (5) s'étendant au maximum sur 90° dans la direction circonférentielle et sont disposés en décalage les uns par rapport aux autres dans la direction circonférentielle du tube (8),
- le gradin longitudinal respectif (11) est moulé par injection sur le tube ondulé (5).

2. Tube ondulé selon la revendication 1,
**caractérisé en ce que**
le gradin longitudinal respectif (11) est moulé par injection au moyen d'une technique à deux composants sur le tube ondulé (5).

3. Tube ondulé selon les revendications 1 ou 2,
**caractérisé en ce que**
le tube ondulé (5) est un tube moulé par soufflage, sur lequel le gradin longitudinal respectif (11) est moulé par injection.

4. Tube ondulé selon une des revendications 1 à 3,
**caractérisé en ce que**
le gradin longitudinal respectif (11) est constitué d'un autre plastique que le tube ondulé (5).

5. Tube ondulé selon une des revendications 1 à 4,
**caractérisé en ce que**
la portion circonférentielle (14) s'étend sur 30° au maximum dans la direction circonférentielle.

6. Tube ondulé selon une des revendications 1 à 5,
**caractérisé en ce que**
deux portions circonférentielles (14) de ce type sont prévues avec des gradins longitudinaux (11), qui sont disposés diamétralement l'un par rapport à l'autre.

7. Tube ondulé selon une des revendications 1 à 6,
**caractérisé en ce que**
- au moins un tel gradin longitudinal (11) est disposé à l'extérieur sur le tube ondulé (5), et relie ainsi au moins une plissure annulaire (6i) orientée vers l'intérieur avec les deux plissures annulaires (6a) voisines, orientées vers l'extérieur, et/ou
- au moins un tel gradin longitudinal (11) est disposé à l'intérieur sur le tube ondulé (5) et relie ainsi au moins une plissure annulaire (6a) orientée vers l'extérieur avec les deux plissures annulaires (6i) voisines, orientées vers l'extérieur,
- dans lequel il peut notamment être prévu que au moins un gradin longitudinal (11) disposé à l'extérieur sur le tube ondulé et au moins un gradin longitudinal (11) disposé à l'intérieur sur le tube ondulé (5) sont prévus, qui peuvent notamment être disposés en alignement l'un par rapport à l'autre dans la direction radiale.

8. Tube ondulé selon une des revendications 1 à 7, **caractérisé en ce que**
- au moins un tel gradin longitudinal (11) relie exactement trois plissures annulaires (6) les unes aux autres, et/ou
- au moins un tel gradin longitudinal (11) s'étend dans la direction longitudinale du tube (8) dans la mesure où il commence sur la première plissure annulaire (6') ou se termine sur la dernière plissure annulaire (6"), et/ou
- au moins un tel gradin longitudinal (11) s'étend dans la direction longitudinale du tuyau (8) dans la mesure où il s'étend sur la première plissure annulaire (6') ou sur la dernière plissure annulaire (6").

9. Tube ondulé selon une des revendications 1 à 8,
**caractérisé en ce que**
- plusieurs gradins longitudinaux (11), qui relient respectivement plusieurs, néanmoins pas toutes les plissures annulaires (6), notamment seulement trois plissures annulaires (6), sont disposés les uns derrière les autres dans la direction longitudinale du tube (8) et sont respectivement espacés les uns des autres par au moins une plissure annulaire (6), et/ou
- plusieurs gradins longitudinaux (11) se succèdent dans la direction longitudinale du tube (8) et sont disposés en décalage les uns des autres dans la direction circonférentielle.

10. Tube ondulé selon une des revendications 1 à 9,
**caractérisé en ce que**
- au moins un tel gradin longitudinal (11) est dimensionné radialement de telle sorte qu'il ne dépasse pas radialement à l'extérieur au-dessus de la plissure annulaire (6) orientée vers l'extérieur ou ne dépasse pas radialement à l'intérieur au-dessus de la plissure annulaire (6i) orientée vers l'intérieur, et/ou
- au moins un tel gradin longitudinal (11) présent un profilé rectangulaire transversalement à la direction longitudinale du tube (8).

11. Tube ondulé selon une des revendications 1 à 10,
**caractérisé en ce que** au moins une plissure longitudinale (9) est prévue, qui s'étend dans la direction longitudinale du tube (8) et traverse ainsi au moins une plissure annulaire (6).

12. Tube, notamment d'une installation d'air frais (1) d'un moteur à combustion interne, de préférence d'un véhicule automobile, comportant au moins une portion de tube (4), qui est conçu comme un tube ondulé (5) selon une des revendications 1 à 11.

13. Installation d'air frais pour moteur à combustion interne, notamment d'un véhicule automobile, comportant au moins un tube (3) selon la revendication 12 ou au moins un tube ondulé (5) selon une des revendications 1 à 11.
